# EUROPEAN PATENT SPECIFICATION

(11) **EP 2 982 198 B1**
(45) Date of publication and mention of the grant of the patent: **18.11.2020**
(21) Application number: 13880834.0
(22) Date of filing: 02.04.2013
(51) Int. Cl.: H04W 72/04, H04L 5/00

(54) **METHOD AND APPARATUS FOR DATA RADIO BEARER CONFIGURATION IN A HETEROGENEOUS NETWORK**
VERFAHREN UND VORRICHTUNG ZUR DATENFUNKTRÄGERKONFIGURATION IN EINEM HETEROGENEN NETZWERK
PROCÉDÉ ET APPAREIL DE CONFIGURATION D'UN SUPPORT RADIO DANS UN RÉSEAU HÉTÉROGÈNE

(43) Date of publication of application: 10.02.2016
(73) Proprietor: Nokia Technologies Oy, 02610 Espoo (FI)
(72) Inventor: LI, Haitao, Beijing 100085 (CN); LIU, Yang, Beijing 100191 (CN); SEBIRE, Benoist, Tokyo 162-0825 (JP)
(74) Representative: Laine IP Oy
(86) International application number: PCT/CN2013/073671
(87) International publication number: WO 2014/161162

(56) References cited:
- EP-A1- 2 888 906
- WO-A2-2010/033073
- CN-A- 102 238 619
- CN-A- 102 440 022
- US-A1- 2012 281 601
- QUALCOMM INCORPORATED: "Optimizations for enhanced mobility in Heterogeneous Networks", 3GPP DRAFT; R2-130434_OPTIMIZATIONS FOR ENHANCED MOBILITY IN HETEROGENEOUS NETWORKS, 3RD GENERATION PARTNERSHIP PROJECT (3GPP), MOBILE COMPETENCE CENTRE ; 650, ROUTE DES LUCIOLES ; F-06921 SOPHIA-ANTI , vol. RAN WG2, no. St. Julian; 20130128 - 20130201 19 January 2013 (2013-01-19), XP050668359, Retrieved from the Internet: URL:http://www.3gpp.org/ftp/tsg_ran/WG2_RL 2/TSGR2_81/Docs/ [retrieved on 2013-01-19]
- ROHDE & SCHWARZ: "Corrections to 8.3.4.x Dual Carrier HSDPA testcases", 3GPP DRAFT; 34123-1_CR2822_(REL-9)_R5-104559, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE, vol. RAN WG5, no. Madrid, Spain; 20100823, 9 September 2010 (2010-09-09), XP050456916, [retrieved on 2010-09-09]
- HUAWEI ET AL: "Feasible scenarios and benefits of dual connectivity in small cell deployment", 3GPP DRAFT; R2-130225, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE , vol. RAN WG2, no. St. Julian; 20130128 - 20130201 19 January 2013 (2013-01-19), XP050668294, Retrieved from the Internet: URL:http://www.3gpp.org/ftp/tsg_ran/WG2_RL 2/TSGR2_81/Docs/ [retrieved on 2013-01-19]

## Description

### TECHNICAL FIELD

The present application relates generally to data radio bearer configuration for dual connectivity to both macro cell layer and small cell layer in a heterogeneous network.

### BACKGROUND

Various abbreviations that appear in the specification and/or in the drawing figures are defined as below:
- CA: Carrier Aggregation
- DRB: Data Radio Bearer
- eNB: evolved Node B
- PCell: Primary Cell
- PDCCH: Physical Dedicated Control CHannel
- QoS: Quality of Service
- RRC: Radio Resource Control
- Scell: Secondary Cell
- UE: User Equipment

Dual connectivity to both macro cell layer and small cell layer can bring many benefits to a UE, such as increased data rate, robust mobility control, and so on. Network can also benefit from it in terms of flexible offloading and load balancing. To model dual connectivity, inter-site CA, or inter-eNB CA, is one of the feasible options. For inter-site CA with macro eNB and small cell eNB physically located in separate sites, UE sees one RRC entity which is responsible for signalling all radio resources configurations in macro layer and small cell layer to the UE. Typically primary serving cell is managed on a macro cell layer and secondary serving cells are managed on a small cell layer. This is because macro cell has relatively large coverage and more coordinated deployment as compared to the small cells, therefore it is more suitable to maintain and manage UE's network connection with less frequent cell change or handover encountered during UE's mobility. Besides inter-site CA, dual RRC is another option for modeling dual connectivity. With dual RRC, the UE sees two distinct RRC entities: one in the small cell and one in the macro cell. The small cell is then able to signal some radio resources configurations directly to the UE. This would however still require some coordination with the macro eNB for instance to make sure that the UE capability are not exceeded. A DRB is established for each logical channel. And a DRB transmission may be configured for one or more serving cells.

3GPP discussion document "Optimizations for enhanced mobility in Heterogeneous Networks", Qualcomm, 3GPP TSG RAN WG2 meeting #81, R2-130434, January 28th - February 1st 2013, St. Julian's, Malta, is about mobility in heterogeneous networks and discloses a method for serving cell change (SCC) involving use of radio bearer reconfiguration (RBR) messages from a serving cell to user equipment.

3GPP Change Request document "Corrections to 8.3.4.x Dual Carrier HSDPA testcases", Rohde&Schwarz, to specification 34.123 version 9.1.0 3GPP TSG-RAN WG5 Meeting #48, R5-104559 Madrid, Spain, 23 - 27 Aug 2010 is about soft handovers, and further to dual-cell (DC) activation by serving cell change. UTRAN may order a UE to add and/or remove a radio link and send an Active Set Update message on downlink DCCH. The UTRAN may include: "Radio Link Addition" information element comprising downlink DCH information and other optional parameters relevant for the radio links to be added, or "E-DCH reconfiguration information" element to indicate which radio link to add to the E-DCH active set in case of addition of radio link already in the DCH active set to the E-DCH active set.

3GPP document "Feasible scenarios and benefits of dual connectivity in small cell deployment", Huawei, HiSilicon, 3GPP TSG-RAN WG2 Meeting #81 R2-130225 St. Julian's, Malta, 28 January - 1 February 2013 discusses scenarios of dual connectivity in small cell deployment. Dual connectivity to macro and small cells may be served by different eNBs.

EP2888906 discloses methods for operating with multiple schedulers in wireless systems, wherein a wireless transmit/receive unit (WTRU) may exchange data with a network over more than one data path, such that each data path may use a radio interface connected to a different network node.

### SUMMARY

The invention is defined by appended claims. The embodiments that do not fully fall under the scope of the claims have to be interpreted as examples useful for understanding the invention.

According to a first aspect of the present invention, an apparatus comprising: at least one processor; and at least one memory including computer program code, wherein the at least one memory and the computer program code are configured to, with the at least one processor, cause the apparatus to perform at least the following: receive information on data radio bearer transmission configuration from a primary serving cell or a secondary serving cell which indicates configuration of data radio bearer transmission in at least one serving cell; and transmit data according to the configuration.

According to a second aspect of the present invention, a method comprising: receiving information on data radio bearer transmission configuration from a primary serving cell or a secondary serving cell which indicates configuration of data radio bearer transmission in at least one serving cell; and transmitting data according to the configuration.

According to a third aspect of the present invention, a computer program product comprising a computer-readable medium bearing computer program code embodied therein for use with a computer, the computer program code comprising: code for receiving information on data radio bearer transmission configuration from a primary serving cell or a secondary serving cell which indicates configuration of data radio bearer transmission in at least one serving cell; and code for transmitting data according to the configuration.

According to a fourth aspect of the present invention, an apparatus comprising: at least one processor; and at least one memory including computer program code, wherein the at least one memory and the computer program code are configured to, with the at least one processor, cause the apparatus to perform at least the following: configure data radio bearer transmission for at least one serving cell; and transmit information on the data radio bearer transmission configuration to a user equipment.

According to a fifth aspect of the present invention, an apparatus comprising: means for receiving information on data radio bearer transmission configuration from a primary serving cell or a secondary serving cell which indicates configuration of data radio bearer transmission in at least one serving cell; and means for transmitting data according to the configuration.

According to a sixth aspect of the present invention, an apparatus comprising: means for configuring data radio bearer transmission for at least one serving cell; and means for transmitting information on the data radio bearer transmission configuration to a user equipment.

### BRIEF DESCRIPTION OF THE DRAWINGS

For a more complete understanding of example embodiments of the present invention, reference is now made to the following descriptions taken in connection with the accompanying drawings in which:
FIGURE 1 illustrates an exemplary heterogeneous network in which the example embodiments of the present invention may be practiced;
FIGURE 2 illustrates a block diagram of an apparatus in accordance with an example embodiment of the invention;
FIGURE 3 is a flow chart illustrating an example method for data radio bearer configuration in a heterogeneous network in accordance with an example embodiment of the invention; and
FIGURE 4 is a flow chart illustrating an example method for data radio bearer configuration in a heterogeneous network in accordance with another example embodiment of the invention.

### DETAILED DESCRIPTON OF THE DRAWINGS

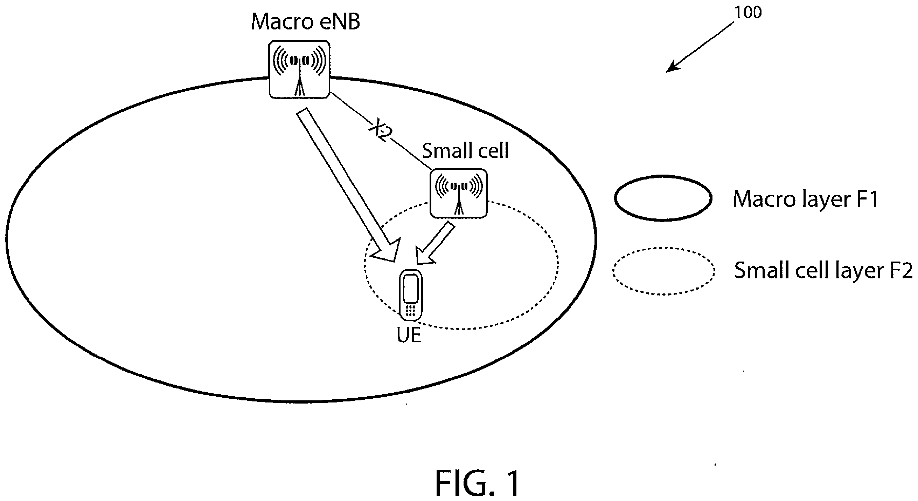

An example embodiment of the present invention and its potential advantages are understood by referring to FIGURES 1 through 4 of the drawings.

FIGURE 1 illustrates an exemplary heterogeneous network 100 in which the example embodiments of the present invention may be practiced. As illustrated in Fig. 1, in the heterogeneous network ("HetNet" for short) 100, a UE is in connection with a macro eNB and a small cell eNB, i.e., in a dual connectivity mode. The coverage areas of the eNBs are depicted by ellipses of different sizes, wherein the coverage area of the macro eNB is much larger than that of the small cell eNB and overlays the coverage area of the small cell eNB. The macro eNB is in connection with the small cell eNB via an open (e.g. X2) interface over non-ideal backhaul. It should be noted that only one secondary cell is shown for a simplified purpose and there may exist multiple secondary cells under the coverage area of the macro eNB or small cell eNB and thus may provide component carriers F3, F4, F5, ... , for UE's measurement, mobility decision-making and CA.

In the dual connectivity mode, if the CA is supported, the UE may be served by multiple cells over different component carriers of one or two eNBs. For example, as shown in FIG. 1, the UE is served by the macro eNB (i.e., primary serving cell (PCell)) over a primary component carrier F1. The UE is also served by the small cell eNB (i.e., secondary serving cell (SCell)) over secondary component carrier F2.

In the HetNet scenario as depicted in FIG. 1, wireless service operators, if owning plenty of spectrum, usually deploy a set of macro frequencies and a set of small cell frequencies (e.g., F1 and F2 as illustratively depicted). Such kind of deployment can eliminate the need of co-channel interference/cancellation between small cells and macro cells, and can also facilitate high end-user throughput by utilizing dual connectivity simultaneously, e.g. by performing inter-site CA. In the inter-site CA, UE's movement among small cells leads to SCell mobility. Such SCell mobility usually does not have impact on PCell as long as UE is moving within the coverage area of the same macro cell (i.e., PCell), e.g., the bigger ellipse as depicted in Fig.1. SCell mobility, or more specifically referred to as SCell replacement, is important for maintaining UE's data rate and end user's experience. Fast SCell replacement is always required to avoid data rate degradation or even data interruption.

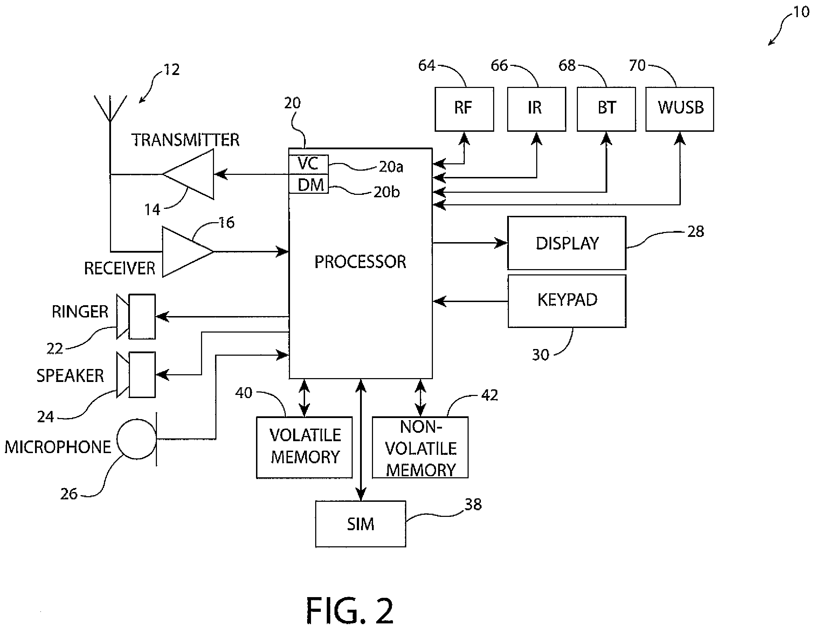

FIGURE 2 illustrates a block diagram of an apparatus 10 such as, for example, a mobile terminal, in accordance with an example embodiment of the invention. While several features of the apparatus are illustrated and will be hereinafter described for purposes of example, other types of electronic devices, such as mobile telephones, mobile computers, portable digital assistants, PDAs, pagers, laptop computers, desktop computers, gaming devices, televisions, routers, home gateways, and other types of electronic systems, may employ various embodiments of the invention.

As shown, the mobile terminal 10 may include at least one antenna 12 in communication with a transmitter 14 and a receiver 16. Alternatively transmit and receive antennas may be separate. The mobile terminal 10 may also include a processor 20 configured to provide signals to and receive signals from the transmitter and receiver, respectively, and to control the functioning of the apparatus. Processor 20 may be configured to control the functioning of the transmitter and receiver by effecting control signaling via electrical leads to the transmitter and receiver. Likewise processor 20 may be configured to control other elements of apparatus 10 by effecting control signaling via electrical leads connecting processor 20 to the other elements, such as for example a display or a memory. The processor 20 may, for example, be embodied as various means including circuitry, at least one processing core, one or more microprocessors with accompanying digital signal processor(s), one or more processor(s) without an accompanying digital signal processor, one or more coprocessors, one or more multicore processors, one or more controllers, processing circuitry, one or more computers, various other processing elements including integrated circuits such as, for example, an application specific integrated circuit, ASIC, or field programmable gate array, FPGA, or some combination thereof. Accordingly, although illustrated in FIG. 2 as a single processor, in some embodiments the processor 20 comprises a plurality of processors or processing cores. Signals sent and received by the processor 20 may include signaling information in accordance with an air interface standard of an applicable cellular system, and/or any number of different wireline or wireless networking techniques, comprising but not limited to Wi-Fi, wireless local access network, WLAN, techniques such as Institute of Electrical and Electronics Engineers, IEEE, 802.11, 802.16, and/or the like. In addition, these signals may include speech data, user generated data, user requested data, and/or the like. In this regard, the apparatus may be capable of operating with one or more air interface standards, communication protocols, modulation types, access types, and/or the like. More particularly, the apparatus may be capable of operating in accordance with various first generation, 1G, second generation, 2G, 2.5G, third-generation, 3G, communication protocols, fourth-generation, 4G, communication protocols, Internet Protocol Multimedia Subsystem, IMS, communication protocols, for example, session initiation protocol, SIP, and/or the like. For example, the apparatus may be capable of operating in accordance with 2G wireless communication protocols IS-136, Time Division Multiple Access TDMA, Global System for Mobile communications, GSM, IS-95, Code Division Multiple Access, CDMA, and/or the like. Also, for example, the mobile terminal may be capable of operating in accordance with 2.5G wireless communication protocols General Packet Radio Service. GPRS, Enhanced Data GSM Environment, EDGE, and/or the like. Further, for example, the apparatus may be capable of operating in accordance with 3G wireless communication protocols such as Universal Mobile Telecommunications System, UMTS, Code Division Multiple Access 2000, CDMA2000, Wideband Code Division Multiple Access, WCDMA, Time Division-Synchronous Code Division Multiple Access, TD-SCDMA, and/or the like. The apparatus may be additionally capable of operating in accordance with 3.9G wireless communication protocols such as Long Term Evolution, LTE, or Evolved Universal Terrestrial Radio Access Network, E-UTRAN, and/or the like. Additionally, for example, the apparatus may be capable of operating in accordance with fourth-generation, 4G, wireless communication protocols such as LTE Advanced and/or the like as well as similar wireless communication protocols that may be developed in the future.

Some Narrow-band Advanced Mobile Phone System, NAMPS, as well as Total Access Communication System, TACS, mobile terminal apparatuses may also benefit from embodiments of this invention, as should dual or higher mode phone apparatuses, for example, digital/analog or TDMA/CDMA/analog phones. Additionally, apparatus 10 may be capable of operating according to Wi-Fi or Worldwide Interoperability for Microwave Access, WiMAX, protocols.

It is understood that the processor 20 may comprise circuitry for implementing audio/video and logic functions of apparatus 10. For example, the processor 20 may comprise a digital signal processor device, a microprocessor device, an analog-to-digital converter, a digital-to-analog converter, and/or the like. Control and signal processing functions of the mobile terminal may be allocated between these devices according to their respective capabilities. The processor may additionally comprise an internal voice coder, VC, 20a, an internal data modem, DM, 20b, and/or the like. Further, the processor may comprise functionality to operate one or more software programs, which may be stored in memory. In general, processor 20 and stored software instructions may be configured to cause apparatus 10 to perform actions. For example, processor 20 may be capable of operating a connectivity program, such as a web browser. The connectivity program may allow the mobile terminal 10 to transmit and receive web content, such as location-based content, according to a protocol, such as wireless application protocol, WAP, hypertext transfer protocol, HTTP, and/or the like

Apparatus 10 may also comprise a user interface including, for example, an earphone or speaker 24, a ringer 22, a microphone 26, a display 28, a user input interface, and/or the like, which may be operationally coupled to the processor 20. In this regard, the processor 20 may comprise user interface circuitry configured to control at least some functions of one or more elements of the user interface, such as, for example, the speaker 24, the ringer 22, the microphone 26, the display 28, and/or the like. The processor 20 and/or user interface circuitry comprising the processor 20 may be configured to control one or more functions of one or more elements of the user interface through computer program instructions, for example, software and/or firmware, stored on a memory accessible to the processor 20, for example, volatile memory 40, non-volatile memory 42, and/or the like. Although not shown, the apparatus may comprise a battery for powering various circuits related to the mobile terminal, for example, a circuit to provide mechanical vibration as a detectable output. The user input interface may comprise devices allowing the apparatus to receive data, such as a keypad 30, a touch display, which is not shown, a joystick, which is not shown, and/or at least one other input device. In embodiments including a keypad, the keypad may comprise numeric 0-9 and related keys, and/or other keys for operating the apparatus.

As shown in FIG. 2, apparatus 10 may also include one or more means for sharing and/or obtaining data. For example, the apparatus may comprise a short-range radio frequency, RF, transceiver and/or interrogator 64 so data may be shared with and/or obtained from electronic devices in accordance with RF techniques. The apparatus may comprise other short-range transceivers, such as, for example, an infrared, IR, transceiver 66, a Bluetooth™,BT, transceiver 68 operating using Bluetooth™ brand wireless technology developed by the Bluetooth™ Special Interest Group, a wireless universal serial bus, USB, transceiver 70 and/or the like. The Bluetooth™ transceiver 68 may be capable of operating according to low power or ultra-low power Bluetooth™ technology, for example, Wibree™, radio standards. In this regard, the apparatus 10 and, in particular, the short-range transceiver may be capable of transmitting data to and/or receiving data from electronic devices within a proximity of the apparatus, such as within 10 meters, for example. Although not shown, the apparatus may be capable of transmitting and/or receiving data from electronic devices according to various wireless networking techniques, including 6LoWpan, Wi-Fi, Wi-Fi low power, WLAN techniques such as IEEE 802.11 techniques, IEEE 802.15 techniques, IEEE 802.16 techniques, and/or the like.

The apparatus 10 may comprise memory, such as a subscriber identity module, SIM, 38, a removable user identity module, R-UIM, and/or the like, which may store information elements related to a mobile subscriber. In addition to the SIM, the apparatus may comprise other removable and/or fixed memory. The apparatus 10 may include volatile memory 40 and/or non-volatile memory 42. For example, volatile memory 40 may include Random Access Memory, RAM, including dynamic and/or static RAM, on-chip or off-chip cache memory, and/or the like. Non-volatile memory 42, which may be embedded and/or removable, may include, for example, read-only memory, flash memory, magnetic storage devices, for example, hard disks, floppy disk drives, magnetic tape, etc., optical disc drives and/or media, non-volatile random access memory, NVRAM, and/or the like. Like volatile memory 40, non-volatile memory 42 may include a cache area for temporary storage of data. At least part of the volatile and/or non-volatile memory may be embedded in processor 20. The memories may store one or more software programs, instructions, pieces of information, data, and/or the like which may be used by the apparatus for performing functions of the mobile terminal. For example, the memories may comprise an identifier, such as an international mobile equipment identification, IMEI, code, capable of uniquely identifying apparatus 10.

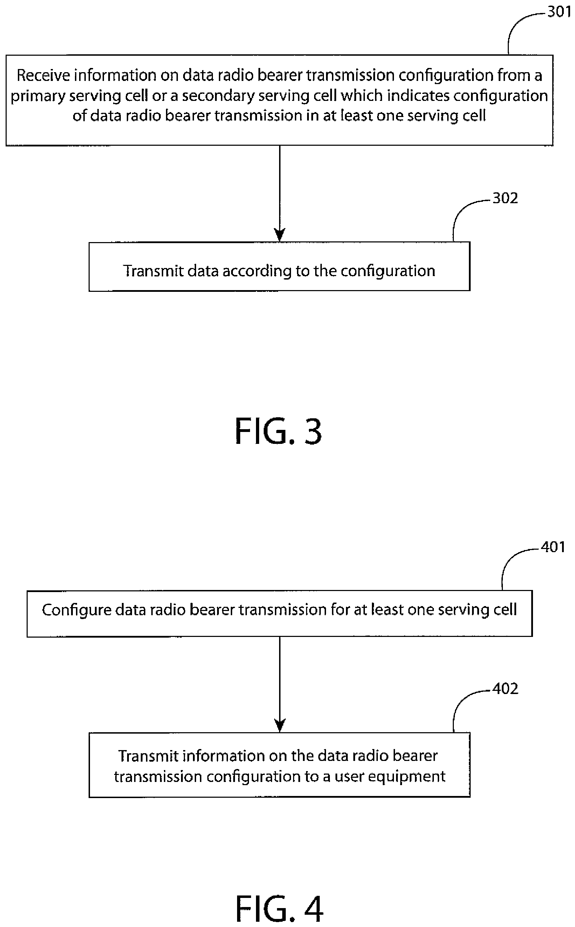

FIGURE 3 is a flow chart illustrating an example method for data radio bearer configuration in a heterogeneous network in accordance with an example embodiment of the invention. Example method 300 may be performed by or in an apparatus, such as the apparatus 10 of FIG. 2.

At block 301, the apparatus receives information on data radio bearer transmission configuration from a primary serving cell or a secondary serving cell such as, for example, a serving cell served by the marco eNB or a serving cell served by the small cell eNB of FIG. 1. In an example embodiment, the information on data radio bearer transmission configuration indicates configuration of data radio bearer transmission in a secondary serving cell. In another example embodiment, the information on data radio bearer transmission configuration indicates configuration of data radio bearer transmission in a plurality of secondary serving cells to increase the data throughput. In yet another example embodiment, the information on data radio bearer transmission configuration indicates configuration of data radio bearer transmission in a primary serving cell.

In an example embodiment, the information on data radio bearer transmission configuration is received when the apparatus enters into dual connectivity mode from macro cell's single connectivity mode. The primary serving cell may decide to offload or redirect one or more existing DRBs to one or more secondary serving cells in the small cell layer. The offloading or redirecting may be based at least in part on the QoS characteristics of data traffic. The offloading or redirecting may be based at least in part on the radio condition of primary serving cell and the radio condition of one or more secondary cells. In another example embodiment, the information on data radio bearer transmission configuration is received when the apparatus is in dual connectivity mode and the primary serving cell decides to offload or redirect at least one of existing data radio bearers to one or more secondary serving cells. The offloading or redirecting may be based at least in part on QoS characteristics of data traffic. The offloading or redirecting may be based at least in part on the radio condition of primary serving cell and the radio condition of one or more secondary cells. In yet another embodiment, the information on data radio bearer transmission configuration is received when the apparatus is in dual connectivity mode and the primary serving cell or the secondary serving cell decides to set up at least one new data radio bearer in one or more secondary serving cells.

In an example embodiment, the information on data radio bearer configuration comprises an indicator which indicates whether the data radio bearer transmission is configured for the at least one serving cell. If the indicator indicates the data radio bearer transmission is not configured for the at least one serving cell, then there is no preference of data radio bear transmission on any serving cells. If the indicator indicates the data radio bearer transmission is configured for the at least one serving cell, then the information on data radio bearer transmission configuration may further comprise one or more cell indexes of the at least one serving cell. The information on data radio bearer transmission configuration may also comprise a second indicator which indicates whether the data radio bearer transmission is prioritized on the one or more serving cells indicated by the one or more cell indexes, or data radio bearer transmission is designated only on the one or more serving cells indicated by the one or more cell indexes. For example, if the information on configuration comprises a cell index, then the second indicator indicates the data radio bearer configuration is prioritized or designated on a serving cell which is indicated by the cell index. In another example, if the information on configuration comprises two cell indexes, then the second indicator indicates the data radio bearer configuration is prioritized or designated on two serving cells which are indicated by the two cell indexes. In an example embodiment, if the second indicator indicates the data radio bearer transmission is prioritized on the one or more serving cells indicated by the one or more cell indexes, the apparatus prioritizes data transmission on the one or more serving cells which are indicated by the one or more cell indexes. If the one or more serving cells indicated by the cell indexes are not available, the apparatus may transmit data to other serving cells. In an example embodiment, if the second indicator indicates the data radio bearer transmission is designated only on the one or more serving cells indicated by the one or more cell indexes, the apparatus designates data transmission on the one or more serving cells which are indicated by the one or more cell indexes. If the one or more serving cells indicated by the one or more cell indexes are not available, no data is sent by the apparatus.

In another example embodiment, a DRB space is reserved to indicate the DRBs assigned to the at least one serving cell. For example, the highest N (N is an integer and may be communicated between network and the apparatus) DRB indexes are reserved for the at least one serving cell. When a DRB within the reserved space is received, the apparatus is aware that data for the DRB will be transmitted to the at least one serving cell.

In an example embodiment, the information on data radio bearer transmission configuration is received through a radio resource control (RRC) dedicated signaling. In an example embodiment, the information is carried in a data radio bearer add or modify message in the radio resource control message.

In an example embodiment, after the apparatus receives the information on data radio bearer configuration and the information indicates that at least one DRB is established in the at least one serving cell, the apparatus allocate data from the at least one DRB in a separate buffer which is specific for transmission in the at least one serving cell.

At block 302, the apparatus transmit data according to the configuration. In an example embodiment, the data is transmitted based on a scheduling command (e.g. PDCCH) from a secondary serving cell. In another embodiment, the data is transmitted based on a scheduling command (e.g. PDCCH) from a primary serving cell.

FIGURE 4 is a flow diagram illustrating an example method for data radio bearer configuration in a heterogeneous network in accordance with another example embodiment of the invention. Example method 400 may be performed by or in an apparatus, such as the macro eNB or the small cell eNB of FIG. 1.

At block 401, the apparatus configures data radio bearer transmission for at least one serving cell. In an example embodiment, the data radio bearer transmission is configured when a UE enters into dual connectivity mode. In another example embodiment, the data radio bearer transmission is configured when a UE is in dual connectivity mode and the apparatus decides to offload or redirect at least one of existing data radio bearers to one or more secondary serving cells. In yet another embodiment, the data radio bearer transmission is configured when a UE is in dual connectivity mode and the apparatus decides to set up at least one new data radio bearer in one or more secondary serving cells.

At block 402, the apparatus transmit information on the data radio bearer transmission configuration. The information on data radio bearer transmission configuration is described in the description section of FIG. 3. The information on the data radio bearer transmission configuration may be transmitted via a radio resource control message. The information on the data radio bearer transmission configuration may be further carried on a data radio bearer add or modify message in the radio resource control message.

Without in any way limiting the scope, interpretation, or application of the claims appearing below, a technical effect of one or more of the example embodiments disclosed herein may be enabling data radio bearer transmission under dual connectivity in a heterogeneous network.

Embodiments of the present invention may be implemented in software, hardware, application logic or a combination of software, hardware and application logic. The software, application logic and/or hardware may reside on an electronic device or a personal key. If desired, part of the software, application logic and/or hardware may reside on an electronic device and part of the software, application logic and/or hardware may reside on a personal key. In an example embodiment, the application logic, software or an instruction set is maintained on any one of various conventional computer-readable media. In the context of this document, a "computer-readable medium" may be any media or means that can contain, store, communicate, propagate or transport the instructions for use by or in connection with an instruction execution system, apparatus, or device. A computer-readable medium may comprise a computer-readable storage medium, for example a non-transitory computer-readable storage medium, that may be any media or means that can contain or store the instructions for use by or in connection with an instruction execution system, apparatus, or device.

If desired, the different functions discussed herein may be performed in a different order and/or concurrently with each other. Furthermore, if desired, one or more of the above-described functions may be optional or may be combined.

Although various aspects of the invention are set out in the independent claims, other aspects of the invention comprise other combinations of features from the described embodiments and/or the dependent claims with the features of the independent claims, and not solely the combinations explicitly set out in the claims.

It is also noted herein that while the above describes example embodiments of the invention, these descriptions should not be viewed in a limiting sense. Rather, there are several variations and modifications which may be made without departing from the scope of the present invention as defined in the appended claims.

## Claims

1. A method, comprising:
receiving (301), by a user equipment in or entering a dual connectivity mode, information on data radio bearer transmission configuration from a primary serving cell which indicates configuration of data radio bearer transmission in at least one secondary serving cell, wherein the information on data radio bearer configuration comprises an indicator which indicates that the data radio bearer transmission is configured for the at least one secondary serving cell, and the information on data radio bearer transmission configuration is received in a data radio bearer add or modify message, and the data radio bearer add or modify message is received in a radio resource control message; and
transmitting (302) data according to the configuration.

2. The method of claim 1, wherein the information on data radio bearer transmission configuration is received when at least one of the following events occurs: the user equipment enters into dual connectivity mode, the user equipment is in dual connectivity mode and the primary serving cell decides to offload or redirect at least one of existing data radio bearers to the at least one secondary serving cell, and the user equipment is in dual connectivity mode and the primary serving cell decides to set up at least one new data radio bearer in the at least one secondary serving cell.

3. The method of claim 1, wherein the information on data radio bearer transmission configuration further comprises one or more cell indexes of the at least one secondary serving cell and a second indicator which indicates whether data radio bearer transmission is prioritized on the at least one secondary serving cell indicated by the one or more cell indexes or data radio bearer transmission is designated only on the at least one secondary serving cell indicated by the one or more cell indexes.

4. A method as in claims 1-3, wherein the data radio bearer transmission is based at least in part on a scheduling command from the primary serving cell or the at least one secondary serving cell.

5. A method as in claims 1-4, wherein the primary serving cell and the at least one secondary serving cell are served by different base stations.

6. An apparatus (10), comprising:
at least one processor (20); and
at least one memory (42) including computer program code,
wherein the at least one memory (42) and the computer program code are configured to, with the at least one processor (20), cause the apparatus to:
receive (301), by the apparatus in or entering a dual connectivity mode, information on data radio bearer transmission configuration from a primary serving cell which indicates configuration of data radio bearer transmission in at least one secondary serving cell, wherein the information on data radio bearer configuration comprises an indicator which indicates that the data radio bearer transmission is configured for the at least one secondary serving cell, and the apparatus is caused to receive the information on data radio bearer transmission configuration in a data radio bearer add or modify message in a radio resource control message; and
transmit (302) data according to the configuration.

7. An apparatus of claim 6, wherein the information on data radio bearer transmission configuration is received when at least one of the following events occurs: the apparatus enters into dual connectivity mode, the apparatus is in dual connectivity mode and the primary serving cell decides to offload or redirect at least one of existing data radio bearers to the at least one secondary serving cell, and the apparatus is in dual connectivity mode and the primary serving cell decides to set up at least one new data radio bearer in the at least one secondary serving cell.

8. An apparatus of claim 6 or 7, wherein the information on data radio bearer transmission configuration further comprises one or more cell indexes of the at least one secondary serving cell and a second indicator which indicates whether data radio bearer transmission is prioritized on the at least one secondary serving cell indicated by the one or more cell indexes or data radio bearer transmission is designated only on the at least one secondary serving cell indicated by the one or more cell indexes.

9. An apparatus of any one of claims 6 to 8, wherein the data radio bearer transmission is based at least in part on a scheduling command from the primary serving cell or the at least one secondary serving cell.

10. An apparatus of any one of claims 6 to 9, wherein the primary serving cell and the at least one secondary serving cell are served by different base stations.

11. A computer-readable storage medium encoded with instructions that, when executed by a computer, cause performance of a method according to any of claims 1-5.

12. An apparatus, comprising:
at least one processor; and
at least one memory including computer program code,
wherein the at least one memory and the computer program code are configured to, with the at least one processor, cause the apparatus to perform at least the following:
configure (401) data radio bearer transmission for at least one secondary serving cell; and
transmit (402) information on the data radio bearer transmission configuration to a user equipment in or entering a dual connectivity mode, wherein the information on data radio bearer configuration comprises an indicator which indicates that the data radio bearer transmission is configured for the at least one serving cell, and the information on data radio bearer transmission configuration is caused to be transmitted in a data radio bearer add or modify message in a radio resource control message.

## Patentansprüche

1. Verfahren, das Folgendes umfasst:
Empfangen (301) von Informationen zu einer Datenfunkträgerübertragungsauslegung durch eine Teilnehmereinrichtung, die sich in einem dualen Konnektivitätsmodus befindet oder in denselben eintritt, von einer primären bedienenden Zelle, die eine Auslegung einer Datenfunkträgerübertragung in mindestens einer sekundären bedienenden Zelle angezeigt, wobei die Informationen zur Datenfunkträgerauslegung einen Indikator umfassen, der anzeigt, dass die Datenfunkträgerübertragung für die mindestens eine sekundäre bedienende Zelle ausgelegt ist, und die Informationen zur Datenfunkträgerübertragungsauslegung in einer Nachricht zum Hinzufügen oder Modifizieren eines Datenfunkträgers empfangen wird und die Nachricht zum Hinzufügen oder Modifizieren des Datenfunkträgers in einer Funkressourcensteuernachricht empfangen wird; und
Übertragen (302) von Daten gemäß der Auslegung.

2. Verfahren nach Anspruch 1, wobei die Informationen zur Datenfunkträgerübertragungsauslegung empfangen werden, wenn mindestens eines der folgenden Ereignisse eintritt: die Teilnehmereinrichtung tritt in einen dualen Konnektivitätsmodus ein, die Teilnehmereinrichtung befindet sich im dualen Konnektivitätsmodus und die primäre bedienende Zelle beschließt, mindestens einen von existierenden Datenfunkträgern abzuladen oder zu der mindestens einen sekundären bedienenden Zelle umzuleiten, und die Teilnehmereinrichtung befindet sich im dualen Konnektivitätsmodus und die primäre bedienende Zelle beschließt, mindestens einen neuen Datenfunkträger in der mindestens einen sekundären bedienenden Zelle einzurichten.

3. Verfahren nach Anspruch 1, wobei die Informationen zur Datenfunkträgerübertragungsauslegung ferner einen oder mehrere Zellindices der mindestens einen sekundären bedienenden Zelle und einen zweiten Indikator, der anzeigt, ob die Datenfunkträgerübertragung in der mindestens einen sekundären bedienenden Zelle, die von dem einen oder den mehreren Zellindices angezeigt wird, priorisiert ist oder ob die Datenfunkträgerübertragung nur in der mindestens einen sekundären bedienenden Zelle, die von dem einen oder den mehreren Zellindices angezeigt wird, designiert ist, umfasst.

4. Verfahren gemäß einem der Ansprüche 1-3, wobei die Datenfunkträgerübertragung mindestens teilweise auf einem Planungsbefehl von der primären bedienenden Zelle oder der mindestens einen sekundären bedienenden Zelle basiert.

5. Verfahren gemäß einem der Ansprüche 1-4, wobei die primäre bedienende Zelle und die mindestens eine sekundäre bedienende Zelle von verschiedenen Basisstationen bedient werden.

6. Vorrichtung (10), die Folgendes umfasst:
mindestens einen Prozessor (20) und
mindestens einen Speicher (42), der einen Computerprogrammcode beinhaltet,
wobei der mindestens eine Speicher (42) und der Computerprogrammcode dazu ausgelegt sind, die Vorrichtung mit dem mindestens einen Prozessor (20) mindestens zu Folgendem zu veranlassen:
Empfangen (301) von Informationen zu einer Datenfunkträgerübertragungsauslegung durch die Vorrichtung, die sich in einem dualen Konnektivitätsmodus befindet oder in denselben eintritt, von einer primären bedienenden Zelle, die eine Auslegung einer Datenfunkträgerübertragung in mindestens einer sekundären bedienenden Zelle angezeigt, wobei die Informationen zur Datenfunkträgerauslegung einen Indikator umfassen, der anzeigt, dass die Datenfunkträgerübertragung für die mindestens eine sekundäre bedienende Zelle ausgelegt ist, und die Vorrichtung veranlasst wird, die Informationen zur Datenfunkträgerübertragungsauslegung in einer Nachricht zum Hinzufügen oder Modifizieren eines Datenfunkträgers in einer Funkressourcensteuernachricht zu empfangen; und
Übertragen (302) von Daten gemäß der Auslegung.

7. Vorrichtung nach Anspruch 6, wobei die Informationen zur Datenfunkträgerübertragungsauslegung empfangen werden, wenn mindestens eines der folgenden Ereignisse eintritt: die Vorrichtung tritt in einen dualen Konnektivitätsmodus ein, die Vorrichtung befindet sich im dualen Konnektivitätsmodus und die primäre bedienende Zelle beschließt, mindestens einen von existierenden Datenfunkträgern abzuladen oder zu der mindestens einen sekundären bedienenden Zelle umzuleiten, und die Vorrichtung befindet sich im dualen Konnektivitätsmodus und die primäre bedienende Zelle beschließt, mindestens einen neuen Datenfunkträger in der mindestens einen sekundären bedienenden Zelle einzurichten.

8. Vorrichtung nach Anspruch 6 oder 7, wobei die Informationen zur Datenfunkträgerübertragungsauslegung ferner einen oder mehrere Zellindices der mindestens einen sekundären bedienenden Zelle und einen zweiten Indikator, der anzeigt, ob die Datenfunkträgerübertragung in der mindestens einen sekundären bedienenden Zelle, die von dem einen oder den mehreren Zellindices angezeigt wird, priorisiert ist oder ob die Datenfunkträgerübertragung nur in der mindestens einen sekundären bedienenden Zelle, die von dem einen oder den mehreren Zellindices angezeigt wird, designiert ist, umfasst.

9. Vorrichtung nach einem der Ansprüche 6 bis 8, wobei die Datenfunkträgerübertragung mindestens teilweise auf einem Planungsbefehl von der primären bedienenden Zelle oder der mindestens einen sekundären bedienenden Zelle basiert.

10. Vorrichtung nach einem der Ansprüche 6 bis 9, wobei die primäre bedienende Zelle und die mindestens eine sekundäre bedienende Zelle von verschiedenen Basisstationen bedient werden.

11. Computerlesbares Speichermedium, das mit Anweisungen codiert ist, die, wenn sie von einem Computer ausgeführt werden, die Durchführung eines Verfahrens nach einem der Ansprüche 1-5 veranlassen.

12. Vorrichtung, die Folgendes umfasst:
mindestens einen Prozessor und
mindestens einen Speicher, der einen Computerprogrammcode beinhaltet,
wobei der mindestens eine Speicher und der Computerprogrammcode dazu ausgelegt sind, die Vorrichtung mit dem mindestens einen Prozessor zu veranlassen, mindestens Folgendes durchzuführen:
Auslegen (401) einer Datenfunkträgerübertragung für mindestens eine sekundäre bedienende Zelle und
Übertragen (402) von Informationen zur Datenfunkträgerübertragungsauslegung zu einer Teilnehmereinrichtung, die sich in einem dualen Konnektivitätsmodus befindet oder in denselben eintritt, wobei die Informationen zur Datenfunkträgerauslegung einen Indikator umfasst, der anzeigt, dass die Datenfunkträgerübertragung für die mindestens eine bedienende Zelle ausgelegt ist, und veranlasst wird, dass die Informationen zur Datenfunkträgerübertragungsauslegung in einer Nachricht zum Hinzufügen oder Modifizieren eines Datenfunkträgers in einer Funkressourcensteuernachricht übertragen werden.

## Revendications

1. Procédé comprenant les étapes suivantes :
recevoir (301), au moyen d'un équipement d'utilisateur se trouvant ou entrant dans un mode de double connectivité, des informations sur une configuration de transmission de support radio de données, en provenance d'une cellule primaire de desserte, qui indiquent la configuration de transmission de support radio de données dans au moins une cellule secondaire de desserte, dans lequel les informations sur la configuration de support radio de données comprennent un indicateur qui indique que la transmission de support radio de données est configurée pour l'au moins une cellule secondaire de desserte, et les informations sur la configuration de transmission de support radio de données sont reçues dans un message d'ajout ou de modification de support radio de données, et le message d'ajout ou de modification de support radio de données est reçu dans un message de gestion des ressources radioélectriques ; et
transmettre (302) des données en fonction de la configuration.

2. Procédé selon la revendication 1, dans lequel les informations sur la configuration de transmission de support radio de données sont reçues lorsqu'au moins l'un des événements suivants se produit : l'équipement d'utilisateur entre dans le mode de double connectivité, l'équipement d'utilisateur se trouve dans le mode de double connectivité et la cellule primaire de desserte décide de se délester d'au moins l'un des supports radio de données existants ou de le rediriger vers l'au moins une cellule secondaire de desserte, et l'équipement d'utilisateur se trouve dans le mode de double connectivité et la cellule primaire de desserte décide d'établir au moins un nouveau support radio de données dans l'au moins une cellule secondaire de desserte.

3. Procédé selon la revendication 1, dans lequel les informations sur la configuration de transmission de support radio de données comprennent en outre un ou plusieurs indice(s) de cellule(s) de l'au moins une cellule secondaire de desserte et un second indicateur qui indique si la transmission de support radio de données est rendue prioritaire sur l'au moins une cellule secondaire de desserte indiquée par le ou les indice (s) de cellule (s) ou si la transmission de support radio de données n'est désignée que sur l'au moins une cellule secondaire de desserte indiquée par le ou les indice(s) de cellule(s).

4. Procédé selon les revendications 1 à 3, dans lequel la transmission de support radio de données est fondée au moins en partie sur une commande de programmation provenant de la cellule primaire de desserte ou de l'au moins une cellule secondaire de desserte.

5. Procédé selon les revendications 1 à 4, dans lequel la cellule primaire de desserte et l'au moins une cellule secondaire de desserte sont desservies par des stations de base différentes.

6. Appareil (10) comprenant :
au moins un processeur (20) ; et
au moins une mémoire (42) comportant un code de programme informatique,
dans lequel l'au moins une mémoire (42) et le code de programme informatique sont configurés pour, au moyen de l'au moins un processeur (20), amener l'appareil à :
recevoir (301), au moyen de l'appareil se trouvant ou entrant dans un mode de double connectivité, des informations sur une configuration de transmission de support radio de données, en provenance d'une cellule primaire de desserte, qui indiquent la configuration de transmission de support radio de données dans au moins une cellule secondaire de desserte, dans lequel les informations sur la configuration de support radio de données comprennent un indicateur qui indique que la transmission de support radio de données est configurée pour l'au moins une cellule secondaire de desserte, et l'appareil est amené à recevoir les informations sur la configuration de transmission de support radio de données dans un message d'ajout ou de modification de support radio de données, à l'intérieur d'un message de gestion des ressources radioélectriques ; et
transmettre (302) des données en fonction de la configuration.

7. Appareil selon la revendication 6, dans lequel les informations sur la configuration de transmission de support radio de données sont reçues lorsqu'au moins l'un des événements suivants se produit : l'appareil entre dans le mode de double connectivité, l'appareil se trouve dans le mode de double connectivité et la cellule primaire de desserte décide de se délester d'au moins l'un des supports radio de données existants ou de le rediriger vers l'au moins une cellule secondaire de desserte, et l'appareil se trouve dans le mode de double connectivité et la cellule primaire de desserte décide d'établir au moins un nouveau support radio de données dans l'au moins une cellule secondaire de desserte.

8. Appareil selon la revendication 6 ou 7, dans lequel les informations sur la configuration de transmission de support radio de données comprennent en outre un ou plusieurs indice (s) de cellule (s) de l'au moins une cellule secondaire de desserte et un second indicateur qui indique si la transmission de support radio de données est rendue prioritaire sur l'au moins une cellule secondaire de desserte indiquée par le ou les indice (s) de cellule (s) ou si la transmission de support radio de données n'est désignée que sur l'au moins une cellule secondaire de desserte indiquée par le ou les indice(s) de cellule(s).

9. Appareil selon l'une quelconque des revendications 6 à 8, dans lequel la transmission de support radio de données est fondée au moins en partie sur une commande de programmation provenant de la cellule primaire de desserte ou de l'au moins une cellule secondaire de desserte.

10. Appareil selon l'une quelconque des revendications 6 à 9, dans lequel la cellule primaire de desserte et l'au moins une cellule secondaire de desserte sont desservies par des stations de base différentes.

11. Support de stockage lisible par ordinateur, sur lequel sont codées des instructions qui, lorsqu'elles sont exécutées par un ordinateur, provoquent la mise en œuvre d'un procédé selon l'une quelconque des revendications 1 à 5.

12. Appareil comprenant :
au moins un processeur ; et
au moins une mémoire comportant un code de programme informatique,
dans lequel l'au moins une mémoire et le code de programme informatique sont configurés pour, au moyen de l'au moins un processeur, faire effectuer à l'appareil au moins ce qui suit :
configurer (401) la transmission de support radio de données pour au moins une cellule secondaire de desserte ; et
transmettre (402) des informations sur la configuration de transmission de support radio de données à un équipement d'utilisateur se trouvant ou entrant dans un mode de double connectivité, dans lequel les informations sur la configuration de support radio de données comprennent un indicateur qui indique que la transmission de support radio de données est configurée pour l'au moins une cellule de desserte, et il est fait en sorte que les informations sur la configuration de transmission de support radio de données soient transmises dans un message d'ajout ou de modification de support radio de données, à l'intérieur d'un message de gestion des ressources radioélectriques.
